(19) Europäisches Patentamt
European Patent Office
Office européen des brevets

(11) EP 1 454 941 A1

(12) EUROPÄISCHE PATENTANMELDUNG

(43) Veröffentlichungstag:
**08.09.2004 Patentblatt 2004/37**

(51) Int Cl.[7]: **C08G 79/04**, C07F 9/30, C07F 9/48

(21) Anmeldenummer: **04004107.1**

(22) Anmeldetag: **24.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **04.03.2003 DE 10309570**

(71) Anmelder: **Clariant GmbH**
**65929 Frankfurt am Main (DE)**

(72) Erfinder:
- **Sicken, Martin, Dr.**
  **51149 Köln (DE)**
- **Krause, Werner, Dr.**
  **50354 Hürth (DE)**
- **Weferling, Norbert, Dr.**
  **50354 Hürth (DE)**
- **Schmitz, Hans-Peter**
  **50321 Brühl (DE)**

(74) Vertreter: **Paczkowski, Marcus, Dr. et al**
**Clariant Service GmbH**
**Patente, Marken, Lizenzen**
**Am Unisys-Park 1**
**65843 Sulzbach (DE)**

(54) **Modifizierte Polyethylenphosphinsäuren und deren Salze**

(57) Die Erfindung betrifft polymere Phosphinsäuren und ihre Salze der allgemeinen Formel (I),

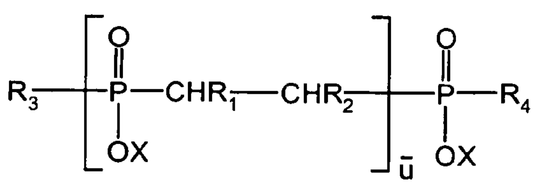

(I)

in der

X Wasserstoff oder ein 1/m Metall der Wertigkeit m bedeutet oder eine protonierte Stickstoffbase bedeutet
$R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen,
$R_3$, $R_4$ gleich oder verschieden sein können und für eine - ggf. substituierte - Alkylgruppe mit 2 - 20 C-Atomen oder für OX mit der oben für X genannten Bedeutung steht und
ü die mittlere Zahl von Monomereinheiten bedeutet.

Die Erfindung betrifft ebenfalls ein Verfahren zur Herstellung der vorgenannten Verbindungen und ihre Verwendung.

EP 1 454 941 A1

## Beschreibung

Die vorliegende Erfindung betrifft neuartige modifizierte polymere Phosphinsäuren und deren Salze sowie ein Verfahren zu ihrer Herstellung und ihre Verwendung.

Phosphinsäuren und deren Salze sind nach verschiedenen Methoden herstellbar und in großem Umfang in der Literatur beschrieben. Bei den bislang bekannten Verbindungen handelt es sich größtenteils um monomere Phosphinsäuren, d.h. um solche Phosphinsäuren die nur eine Phosphinsäuregruppe enthalten. Auch einige Diphosphinsäuren und deren Salze sind bekannt, wie Ethan-1,2-diethylphosphinsäure (P. Mastalerz, Roczniki Chem. 38, 61 (1964).

Hinweise auf polymere Phosphinsäuren beschränken sich bis heute auf Koordinationspolymere, in denen monomere Phosphinsäuren als Brücken-Liganden für Metall-Ionen fungieren. Einen Überblick über diese, als Poly-Metallphosphinate bezeichnete Produktgruppe, findet man in B. P. Block, Inorg. Macromol. Rev., 1 (1970) 115-125.

Die radikalinitiierte Umsetzung von Olefinen mit hypophosphoriger Säure ist bekannt und führt zu den entsprechenden monomeren Phosphinsäuren (DE-A-198 51 618).

Die radikalinitiierte Umsetzung von Alkine (Acetylene)n mit hypophosphoriger Säure wurde ebenfalls untersucht [Nifant'ev et al., Zh. Obshch. Khim. (1986), 56(4) S. 773-781]; als Reaktionsprodukte wurden lediglich Gemische von vinylphosphonigen Säuren, Divinylphosphinsäuren und diphosphonigen Säuren erhalten.

"Echte" polymere Phosphinsäuren, d.h. solche, die auf Basis kovalenter Bindungen aufgebaut sind und in den Wiederholungseinheiten Phosphinsäuregruppierungen enthalten, werden erstmals in der DE 199 12 920 A1 erwähnt. Dort werden Produkte der allg. Formel (I) beschrieben,

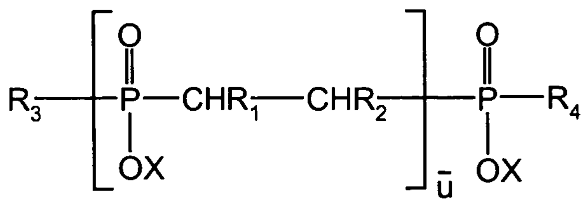

(I)

in der X ein Wasserstoffatom oder ein 1/m Metall der Wertigkeit m bedeutet,
$R_1$ und $R_2$ gleich oder verschieden sein können und für Wasserstoff, für eine Carboxylgruppe, für ein Carbonsäurederivat, für eine - ggf. substituierte - Alkylgruppe mit 1 - 10 C-Atomen, für Phenyl, Benzyl oder für alkylsubstituierte Aromaten stehen,
$R_3$ und $R_4$ gleich oder verschieden sein können und für Wasserstoff oder eine Vinylgruppe der allg. Formel (VI)

$$-CR_1 = CHR_2 \qquad \text{(VI)}$$

mit den für $R_1$ und $R_2$ oben angegebenen Bedeutungen steht und ü die mittlere Zahl von Monomereinheiten bedeutet.

Diese polymeren Produkte besitzen den Nachteil, dass die durch $R_3$ und $R_4$ definierten Endgruppen chemisch und thermisch nur wenig belastbar sind und dementsprechend bei den beispielsweise vorgeschlagenen Anwendung als Flammschutzmittel unerwünschte Nebenreaktionen zeigen können.

Dies bezieht sich vor allem auf die als besonders bevorzugt genannten Produkte mit $R_3$, $R_4$ = H (Phosphonigsäure-Endgruppen), die unter bestimmten Umständen durch Disproportionierung Phosphorprodukte niedrigerer Oxidationsstufen, wie z.B. substituierte Phosphine freisetzen können. Phosphine sind sehr giftig und weisen extrem unangenehme Gerüche auf.

Der Erfindung liegt daher die Aufgabe zugrunde, polymere Phosphinsäuren zur Verfügung zu stellen, die die vorgenannten Nachteile nicht aufweisen und insbesondere in den Endgruppen modifiziert sind.

Die Erfindung betrifft daher polymere Phosphinsäuren und ihre Salze der allgemeinen Formel (I),

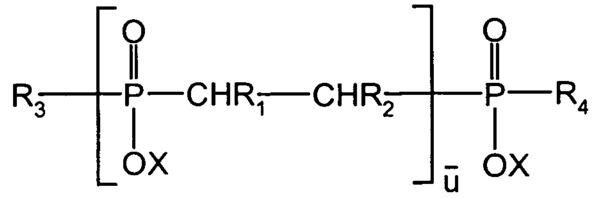

(I)

in der X ein Wasserstoffatom oder ein 1/m Metall der Wertigkeit m oder eine protonierte Stickstoffbase bedeutet,
$R_1$ und $R_2$ gleich oder verschieden sein können und für Wasserstoff, für eine Carboxylgruppe, für ein Carbonsäurederivat, für eine - ggf. substituierte - Alkylgruppe mit 1 - 10 C-Atomen, für Phenyl, Benzyl oder für alkylsubstituierte Aromaten stehen,
$R_3$ und $R_4$ gleich oder verschieden sein können und für eine - ggf. substituierte - Alkylgruppe mit 2 - 20 C-Atomen oder für OX mit der oben für X genannten Bedeutung steht und
$\bar{u}$ die mittlere Zahl von Monomereinheiten bedeutet.

Bevorzugt handelt es sich bei X um ein Metall der Gruppen IA, IIA, IIIA, IVA, VA, IIB, IVB, VIIB, VIIIB des Periodensystems oder um Cer.

Bevorzugt handelt es sich bei dem Metall um Li, Na, K, Mg, Ca, Sr, Ba, Al, Ge, Sn, Sb, Bi, Zn, Ti, Zr, Mn, Fe und/oder Ce.

Besonders bevorzugt handelt es sich bei dem Metall um Na, Ca, Al und/oder Zn.

Bevorzugt handelt es sich bei X um H.

Bevorzugt handelt es sich bei X um die protonierten Formen der Stickstoffbasen Ammoniak, Melamin, Triethanolamin. Unter diesen protonierten Stickstoffbasen werden also insbesondere solche der Formel $NH_4^+$, $C_3N_6H_7^+$, $(CH_3CHOH)NH^+$ verstanden. Solche protonierten Stickstoffbasen werden später auch als "Amin-H+" bezeichnet.

Bevorzugt sind $R_1$, $R_2$ gleich oder verschieden und stehen für Wasserstoff oder für eine - ggf. substituierte - Alkylgruppe mit 1 bis 10 C-Atomen.

Bevorzugt sind $R_1$, $R_2$ gleich oder verschieden und stehen für Wasserstoff oder für eine - ggf. substituierte - Alkylgruppe mit 1 bis 10 C-Atomen, wobei es sich bei den Substituenten um einen oder mehreren aus den Gruppen OH, CN, $NH_2$ handelt.

Bevorzugt sind $R_1$, $R_2$ gleich oder verschieden und stehen für Wasserstoff oder für eine Alkylgruppe mit 1 bis 4 C-Atomen, die mit ein oder zwei OH-Gruppen substituiert ist.

Bevorzugt sind $R_1$, $R_2$ gleich oder verschieden und stehen für Wasserstoff oder für ein Carbonsäurederivat.

Bevorzugt sind $R_1$, $R_2$ gleich oder verschieden und stehen für Wasserstoff oder für ein Carbonsäurederivat der Formel COOR und worin R eine Alkylgruppe mit 1 bis 4 C-Atomen bedeutet.

Bevorzugt stehen $R_3$, $R_4$ für eine - ggf. substituierte - Alkylgruppe mit 1 bis 10 C-Atomen.

Bevorzugt stehen $R_3$, $R_4$ jeweils für eine Ethyl-, Propyl-, Butylgruppe.

Bevorzugt stehen $R_3$, $R_4$ jeweils für eine OX-Gruppe, mit der für X oben angegebenen Bedeutung.

Bevorzugt stehen $R_3$, $R_4$ jeweils für eine OH-Gruppe.

Gegenstand der vorliegenden Erfindung sind insbesondere polymere Phosphinsäuren und ihre Salze der Formeln

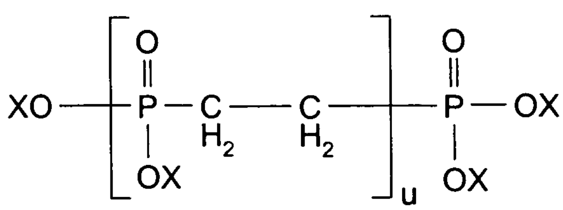

mit X = H, 1/m Metall, Amin-$H^+$

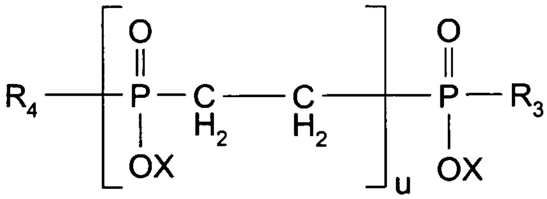

mit X = H, 1/m Metall, Amin-$H^+$
mit $R_3$, $R_4$ = Ethyl, Propyl, Butyl

Die Erfindung betrifft ebenfalls ein Verfahren zur Herstellung von polymeren Phosphinsäuren und ihren Salzen der Formel (I), dadurch gekennzeichnet, dass man zunächst hypophosphorige Säure und/oder ihre Alkalimetallsalze mit Alkinen (Acetylenen) der Formel (II),

$$R_1 - C \equiv C - R_2 \qquad \text{(II)}$$

in der $R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, zu Produkten der allgemeinen Formel (I), in der

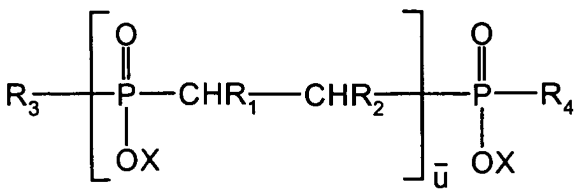

**(I)**

$R_1$ und $R_2$ die oben angegebene Bedeutung haben,
$R_3$ und $R_4$ Wasserstoff sind
X ein Alkalimetall oder Wasserstoff bedeutet und
ū die mittlere Zahl von Monomereinheiten bedeutet, umsetzt,
anschließend eine Umwandlung der entstandenen Phosphonigsäure-Endgruppen ($R_3$, $R_4$ = H) durch Oxidation zu Phosphonsäure-Endgruppen ($R_3$, $R_4$ = OX) oder durch Alkylierung zu Phosphinsäure-Endgruppen ($R_3$, $R_4$ = Alkyl) vornimmt und dann ggf. weiter umsetzt (Variation von X).

Man setzt bevorzugt Alkalimetallsalze der hypophosphorigen Säure mit Alkinen (Acetylenen) der Formel (II) wie oben beschrieben um, modifiziert die Endgruppen, und setzt dann die so erhaltenen Alkalimetallsalze der polymeren Phosphinsäure mit mindestens einer Metallverbindung der Gruppen IA, IIA, IIIA, IVA, VA, IIB, IVB, VIIB, VIIIB des Periodensystems oder mit einer Cerverbindung oder mit Aminen bzw. Amin-Salzen. Dieses Verfahren schließt also die Umwandlung eines ersten Alkalimetallsalzes der polymeren Phosphinsäure in ein anderes Alkalimetallsalz der polymeren Phosphinsäure mit ein.

In einer anderen bevorzugten Verfahrensweise setzt man die Hypophosphorige Säure mit Alkinen (Acetylenen) der Formel (II) wie oben beschrieben um, modifiziert die Endgruppen, und setzt dann die so erhaltenen polymeren Phosphinsäuren mit mindestens einer Metallverbindung der Gruppen IA, IIA, IIIA, IVA, VA, IIB, IVB, VIIB, VIIIB des Periodensystems oder mit einer Cerverbindung oder mit Aminen bzw. Amin-Salzen (den protonierten Stickstoffbasen) um.

Bevorzugt handelt es sich bei der Metallverbindung um eine solche von Li, K, Na, Mg, Ca, Sr, Ba, Al, Ge, Sn, Sb, Bi, Zn, Ti, Zr, Mn, Fe und/oder Ce.

Bevorzugt handelt es sich bei den Aminen um Melamin, Ammoniak, Trialkylamine, Ethanolamine.

Bevorzugt setzt man Alkalimetallsalze der Hypophosphorigen Säure mit Alkinen (Acetylenen) der Formel (II) wie oben beschrieben um, modifiziert die Endgruppen, und setzt die so erhaltenen Alkalimetallsalze der polymeren Phosphinsäure mit einer Säure zur polymeren Phosphinsäure um. Die so erhaltene polymere Phosphinsäure kann dann einem oder mehreren der vorgenannten Verfahrensschritten unterworfen werden.

Die Variation der Variable X in Formel (I) kann daher, wie oben formuliert, auf verschiedene Weise erfolgen. Setzt man beispielsweise als Edukt der oben beschriebenen Umsetzung mit Alkinen (Acetylenen) die leicht erhältlichen Alkalimetallsalze der Hypophosphorigen Säure ein, gelangt man zu den entsprechenden Poly-Alkaliphosphinaten, beispielsweise mit X = Li, Na, K in Formel (I).

Setzt man als Edukt Hypophosphorige Säure ein, gelangt man zu den freien Polyphosphinsäuren mit X = H in Formel (I). Letztere kann man ebenso durch Ansäuern der Alkalimetallphosphinate erhalten.

Durch gängige Fällungs- und Umsalzungsverfahren können aus den Alkalisalzen der Polyphosphinsäuren oder aus den freien Polyphosphinsäuren Polyphosphinsäure-Salze zahlreicher Metalle, wie beispielsweise der Erdalkalimetalle, der Metalle der II. - V. Hauptgruppe sowie der Nebengruppenmetalle und auch von Aminen gewonnen werden.

Bevorzugt setzt man pro Mol Hypophosphorige Säure oder ihrem Alkalimetallsalz 0,6 bis 1,5 Mol Ethin (Acetylen) der Formel (II) ein.

Bevorzugt erfolgt die Umsetzung in Gegenwart eines Radikalstarters.

Bevorzugt werden die Radikalstarter während der Reaktion kontinuierlich zudosiert.

Bevorzugt werden die Radikalstarter während der Reaktion in Form einer Lösung im Olefin kontinuierlich zudosiert.

Bevorzugt werden die Radikalstarter während der Reaktion in Form einer Lösung im verwendeten Lösungsmittel kontinuierlich zudosiert.

Bevorzugt werden als Radikalstarter Azo-Verbindungen eingesetzt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)-dihydrochlorid eingesetzt.

Bevorzugt werden als nicht-kationische Azo-Verbindungen Azobis(isobutyronitril), 4,4'-Azobis(4-cyano-pentansäure) oder 2,2'-Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat, Natriumperoxodisulfat und/oder Kaliumperoxodisulfat eingesetzt.

Bevorzugt werden als peroxidische organische Radikalstarter Dibenzoylperoxid, Ditert.-butylperoxid und/oder Peressigsäure eingesetzt.

Bevorzugt erfolgt die Umsetzung in einem polaren Lösungsmittel.

Bevorzugt handelt es sich bei dem polaren Lösungsmittel um Wasser oder Essigsäure.

Bevorzugt erfolgt die Umsetzung bei einer Temperatur von 20 bis 180°C.

Besonders bevorzugt erfolgt die Umsetzung bei einer Temperatur von 80 bis 120°C.

Bevorzugt erfolgt die Umsetzung in einem Druckreaktor. Dies gilt insbesondere wenn der Siedepunkt der Alkine (Acetylene) unterhalb der Reaktionstemperatur liegt.

In einer anderen bevorzugten Ausführungsform der Erfindung wird das Verfahren drucklos ausgeführt.

Bevorzugt werden als Edukt Hypophosphorige Säure und/oder Alkalisalze der Hypophosphorigen Säure eingesetzt.

Besonders bevorzugt wird Natriumhypophosphit eingesetzt.

Als Alkine (Acetylene) können sowohl das unsubstituierte Ethin (Acetylen) selbst mit $R_1$, $R_2$ = H in Formel (II), einfach substituierte Derivate mit $R_1$ = H; $R_2 \neq$ H in Formel (II) oder aber auch zweifach substituierte Alkine (Acetylene) mit $R_1$, $R_2 \neq$ H in Formel (II) eingesetzt werden.

Beispiele für geeignete Alkine (Acetylene) sind Ethin, Phenylacetylen, Diphenylacetylen, Propin, 1-Butin, 2-Butin, 1-Phenylbutin, 1-Pentin, 2-Pentin, 1-Phenyl-1-pentin, 1-Hexin, 2-Hexin, 3-Hexin, 1-Phenyl-1-hexin, 1-Heptin, 1-Octin, 4-Octin, 1-Nonin, 1-Decin und 1-Dodecin, die Alkinole Propargylalkohol, 1-Butin-3-ol, 2-Butin-1-ol, 2-Butin-1,4-diol, 1-Pentin-3-ol, 2-Pentin-1-ol, 4-Pentin-1-ol, 4-Pentin-2-ol, 3-Hexin-1-ol, 5-Hexin-1-ol, 3-Hexin-2,5-diol, 2-Octin-1-ol, 1-Octin-3-ol, 3-Nonin-1-ol, 3-Decin-1-ol sowie Propargylchlorid, Propargylbromid, Propargylamin, Propiolsäure, Propiolsäuremethylester, Propiolsäureethyl-ester, 2-Butinsäure, 2-Butinsäureethylester, 4-Pentinsäure, 5-Hexinsäurenitril, 2-Octinsäure, 2-Octinsäuremethylester, 2-Nonylsäuremethylester, Acetylendicarbonsäure, Acetylen-dicarbonsäurediethylester und Acetylendicarbonsäuredimethylester.

Bevorzugt werden als Alkine (Acetylene) die 1-Alkine, Propargylalkohol, Butindiol, Propiolsäure und Acetylendicarbonsäure-Derivate eingesetzt.

Besonders bevorzugt wird Ethin (Acetylen) selbst eingesetzt.

Die Oxidation der erhaltenen Phosphonigsäure-Endgruppen zu Phosphonsäure-Endgruppen erfolgt mit gängigen Oxidationsmitteln.

Bevorzugt erfolgt die Oxidation mit Wasserstoffperoxid oder Ammoniumperoxodisulfat.

In einer besonderen Ausführungsform des Verfahrens erfolgt die Endgruppen-Oxidation teilweise bereits während der Polymerherstellung durch den eingesetzten Initiator Ammoniumperoxodisulfat und wird nach Abschluß des Kettenaufbaus lediglich vervollständigt.

Die Umsetzung der erhaltenen Phosphonigsäure-Endgruppen zu Phosphinsäure-Endgruppen erfolgt durch Umsetzung mit Olefinen unter den gleichen Bedingungen, wie sie für die Umsetzung mit Alkinen beschrieben worden sind.

Bevorzugt werden als Olefine Ethylen, Propylen, n-, i-Buten, n-, i-Penten, n-, i-Hexen, n-, i-Octen, 1-Decen, 1,5-Cyclooctadien, 1,3-Cyclopentadien, Dicyclopentadien und/oder 2,4,4-Trimethylpenten-Isomerengemisch eingesetzt.

Bevorzugt tragen die Olefine eine funktionelle Gruppe.

Als Olefine sind auch Verbindungen der allgemeinen Formel

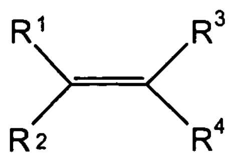

in der $R^1$-$R^4$ gleich oder verschieden sein können und für Wasserstoff, eine Alkylgruppe mit 1 bis 18 C-Atomen, für Phenyl, Benzyl oder alkylsubstituierte Aromaten stehen, geeignet.

Geeignet sind ebenfalls Cycloolefine der Formel

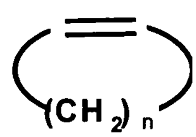

insbesondere Cyclopenten, Cyclohexen, Cycloocten und Cyclodecen. Bevorzugt erfolgt die Umsetzung mit Olefinen nach der Umsetzung mit Alkinen.

Bevorzugt wird das Olefin bereits während der Umsetzung mit Alkinen hinzugefügt.

Schließlich betrifft die Erfindung auch die Verwendung der erfindungsgemäßen polymeren Phosphinsäuren und ihren Salzen als Flammschutzmittel.

Bevorzugt werden die polymeren Phosphinsäuren und ihren Salzen als Flammschutzmittel in thermoplastischen und duroplastischen Polymeren sowie Brandschutzbeschichtungen eingesetzt.

Die erfindungsgemäßen neuen polymeren Phosphinsäuren und deren Salze besitzen aufgrund ihrer Struktur polyelektrolytische Eigenschaften. So können sie beispielsweise als Verdicker oder Wasser-Absorptionsmittel verwendet werden.

Sie können auch zur Herstellung von Synthesebausteinen für die phosphororganische Synthese verwendet werden.

Die erfindungsgemäßen neuen polymeren Phosphinsäuren und deren Salze lassen sich durch die allgemeine Formel (I) beschreiben,

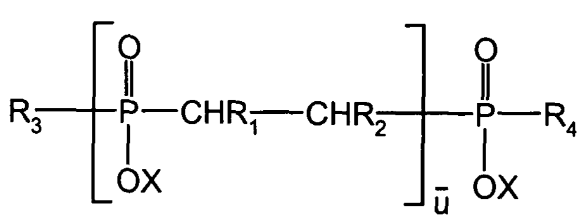

(I)

in der X ein Wasserstoffatom oder ein 1/m Metall der Wertigkeit m oder eine protonierte Stickstoffbase bedeutet, $R_1$

und $R_2$ gleich oder verschieden sein können und für Wasserstoff, für eine Carboxylgruppe, für ein Carbonsäurederivat, für eine - ggf. substituierte - Alkylgruppe mit 1 - 10 C-Atomen, für Phenyl, Benzyl oder für alkylsubstituierte Aromaten stehen,

$R_3$ und $R_4$ gleich oder verschieden sein können und für eine - ggf. substituierte - Alkylgruppe mit 2 - 20 C-Atomen oder für OX mit der oben für X genannten Bedeutung steht und $\bar{u}$ die mittlere Zahl von Monomereinheiten bedeutet. Bevorzugte Werte für $\bar{u}$ liegen zwischen 2 und 1.000, $\bar{u}$ kann aber gegebenenfalls auch größere Werte annehmen.

Wie bei der Bezeichnung von Polymeren üblich, bedeutet $\bar{u}$ die mittlere Zahl der Monomereinheiten, wobei sich $\bar{u}$ aus der Gesamtzahl der Monomereinheiten pro Polymermolekül und der Verteilung (Häufigkeit) der verschiedenen Polymermoleküle ergibt.

Gemäß nachfolgender Definition anhand des weiter unten näher beschriebenen Reaktionsschemas kann u, welches analog zu $\bar{u}$ die relative Zahl der Monomereinheiten angibt, in der beispielhaften Formel (Ia) eine beliebige Zahl zwischen 0 und 10.000, gegebenenfalls auch oberhalb 10.000, sein.

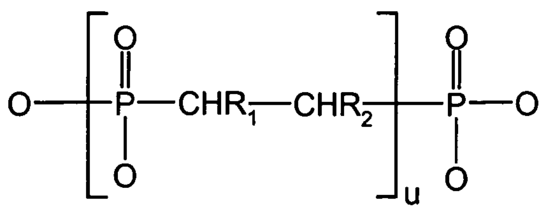

(Ia)

Ist in der vorgenannten beispielhaften Formel (Ia) der Wert für u = 1, erhält man die Ethylendiphosphonsäure. Entsprechend können auch Dimere, Trimere etc. erhalten werden.

Für polymere Phosphinsäuren und ihre Salze mit einem relativ kleinen Wert (z.B. $\bar{u}$ = 3) gilt für die mittlere Kettenlänge ü, dass hier verstärkt Werte für u im Bereich von 0 bis ca. 6 auftreten, während mittlere und längere Polymerketten in ihrer Häufigkeit gegen Null gehen. Umgekehrt ist bei einem recht großen Wert für $\bar{u}$ (z.B. ü = 500) die Zahl von Monomeren, Dimeren, Trimeren etc. verschwindend gering oder mit Null gleichzusetzen, während u, also die relative Zahl von Monomereinheiten zu größeren Zahlenwerten, insbesondere hier im Bereich von 350 bis 700, tendiert.

Es wurde nun überraschenderweise gefunden, dass ein breites Spektrum der vorgenannten polymeren Phosphinsäuren und ihrer Salze auf einfache und besonders wirtschaftliche Art und Weise insbesondere durch radikalinitiierte Polyaddition von Alkinen (Acetylenen) an Hypophosphorige Säure bzw. deren Salze und Modifizierung der entsehenden Phosphonigsäure-Endgruppen hergestellt werden kann.

Das Grundprinzip der Polyaddition kann beispielsweise nach dem folgendem vereinfachten Reaktionsschema am Beispiel der Umsetzung der freien Hypophosphorigen Säure beschrieben werden: In einer ersten Reaktionsstufe (1) wird mit Hilfe eines Radikalinitiators eine P-H-Bindung der Hypophosphorigen Säure an die Dreifachbindung des Alkins (Acetylens) addiert. Intermediär entsteht dabei eine vinylphosphonige Säure (IV), an deren Doppelbindung in einer zweiten Reaktionsstufe

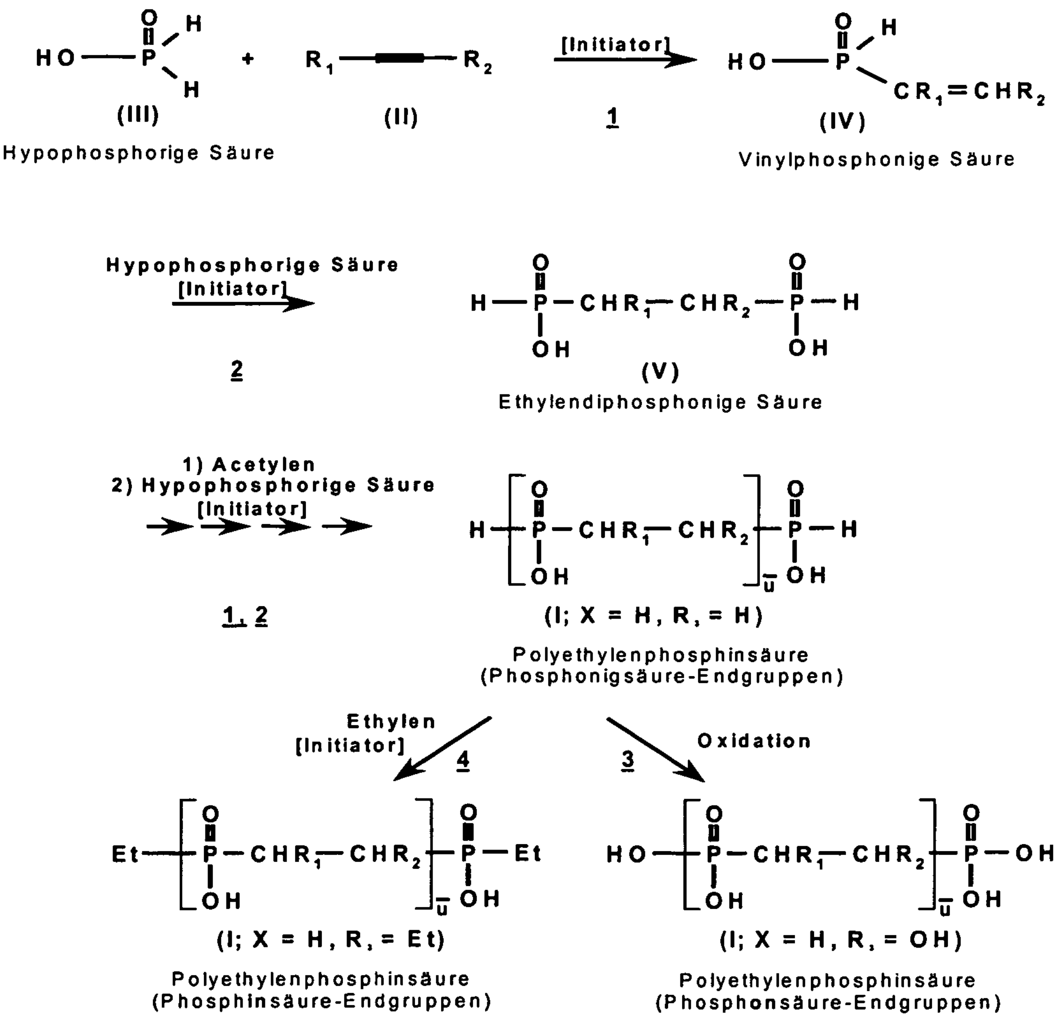


(III) Hypophosphorige Säure

(II)

(IV) Vinylphosphonige Säure

(V) Ethylendiphosphonige Säure

(I; X = H, R, = H) Polyethylenphosphinsäure (Phosphonigsäure-Endgruppen)

(I; X = H, R, = Et) Polyethylenphosphinsäure (Phosphinsäure-Endgruppen)

(I; X = H, R, = OH) Polyethylenphosphinsäure (Phosphonsäure-Endgruppen)

(2) unter gleichen Reaktionsbedingungen ein weiteres Hypophosphit-Molekül addiert wird. Die so entstehende diphosphonige Säure (**V**) wird in vorbeschriebener Weise an weitere Acetylen- und Hypophosphit-Einheiten zu Polyphosphinsäuren (**I**) addiert. Durch Oxidation (3) bzw. Umsetzung mit Olefinen (hier Ethylen) (4) werden dann die Phosphonigsäure-Endgruppen in Phosphonsäure- bzw. Phosphinsäure-Endgruppen umgewandelt.

Der Verlauf des Kettenaufbaus kann während der Reaktion mit Alkinen durch $^{31}$P-NMR-spektroskopische Untersuchungen verfolgt werden. Das Integral der Signalgruppe der phosphonigen Säuren bei $\delta$ = ca. 30 ppm ($Int_{phosphonigs.}$) repräsentiert dabei die vorhandenen Endgruppen, während das Integral der Signalgruppe der Phosphinsäuren bei $\delta$ = ca. 55 ppm ($Int_{phosphins.}$) für die Zahl der mittelständigen Gruppen steht. Die Berechnung der Kettenlänge erfolgt nach folgender Formel:

$$\bar{u} = 1 + \frac{2 \cdot Int_{phosphins.}}{Int_{phosphonigs.}}$$

Auch die nach Modifizierung erhaltenen Endprodukte können nach dieser Formel hinsichtlich ihrer Kettenlänge beurteilt werden, wobei anstelle der Integrale der Phosphonigsäure-Signalgruppe die der endständigen Phosphinsäuren bzw. der Phosphonsäuren in die Formel eingesetzt werden müssen.

Die Kettenlänge der neuen Polyphosphinsäuren und ihrer Salze kann durch die Wahl der Reaktionsbedingungen in einfacher Weise gesteuert und in hohem Maße variiert werden. Wichtigstes Steuerungsglied ist dabei das Verhältnis der Ausgangsprodukte. Setzt man beispielsweise equimolare Mengen Hypophosphit und Ethin (Acetylen) ein und wendet hohe Reaktionszeiten und -Temperaturen an, entstehen besonders hochmolekulare Polyphosphin-

säuren mit $\bar{u}$ > 100.

Setzt man die Edukte beispielsweise im molaren Verhältnis 1 (Hypophosphit) zu 0.75 (Acetylen) ein, so erhält man eine besonders niedermolekulare Polyphosphinsäure mit einer mittleren Kettenlänge von $\bar{u}$ = 3.

Bei gasförmigen Alkinen (Acetylenen), wie dem Ethin (Acetylen) als Stammverbindung selbst, ist die Reaktion über die Dauer der Gaseinleitung zu steuern. Je länger die Ethin- (Acetylen)-Einleitung erfolgt, desto längere Ketten werden aufgebaut.

Gemäß der vorliegenden Erfindung erfolgt die stufenweise Addition von zwei Hypophosphit-Radikalen an die Dreifachbindung, in Formel (I) beschrieben, vorzugsweise in 1,2-Position. Abhängig von den sterischen und elektronischen Einflüssen der Substituenten ($R_1$, $R_2$) im eingesetzten Alkin (Acetylen) kann auch eine 1,1-Addition erfolgen, d.h. es können in den polymeren Phosphinsäuren auch Struktureinheiten des folgenden Typs enthalten sein, in der $R_1$, $R_2$ und X die eingangs genannte Bedeutung haben:

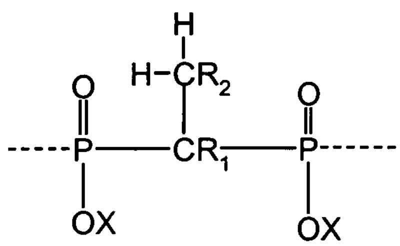

Polymere Phosphinsäuren und deren Salze, die diese Struktureinheiten enthalten, sind ebenfalls Gegenstand der vorliegenden Erfindung.

Daneben können durch Cyclopolyaddition, vor allem wenn die Umsetzung in verdünnter Lösung durchgeführt wird, als Nebenprodukte auch Cyclopolyphosphinsäuren bzw. deren Salze der allgemeinen Formel (IX) entstehen,

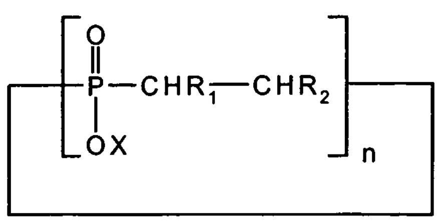

(IX)

in der X ein Wasserstoffatom oder ein 1/m Metall der Wertigkeit m bedeutet, $R_1$ und $R_2$ gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen und in der n für eine Zahl von 2 bis 100 steht.

Solche Cyclopolyphosphinsäuren bzw. deren Salze der allg. Formel (IX) sind ebenfalls Gegenstand der vorliegenden Erfindung.

Die erfindungsgemäßen polymeren Phosphinsäuren und deren Eigenschaften können nicht nur bezüglich ihrer vorherrschenden Endgruppe, sondern in vielfältiger Weise durch die Wahl der Reaktionsbedingungen und vor allem durch die Wahl der Reaktionspartner variiert werden.

Beispiel 1: Polyethylenphosphinsäure (Phosphonsäure-Endgruppen)

In einem beheizbaren Glasrohrreaktor mit Begasungsfritte wurde über einen Zeitraum von 15 h bei einer Temperatur von ca. 100°C gasförmiges Ethin (Acetylen) in eine Lösung von 106 g Natriumhypophosphit (1 mol) in 300 ml Eisessig eingeleitet. Über den gesamten Zeitraum wurde dabei gleichmäßig eine Lösung von 10,8 g (4 Mol-%) 2,2'-Azobis(2-amidinopropan)-dihydrochlorid in 100 g eines Wasser/Essigsäure-Gemisches (1:1) zudosiert. Nach einer Nachreaktionszeit von 0,5 h, Entfernung des Ethins (Acetylens) mittels Durchleiten von Stickstoff wurde innerhalb von 60 min 150 ml 35 %ige Wasserstoffperoxid-Lösung zudosiert. Nach Abkühlung auf Raumtemperatur wurde die Reaktionsmischung von den Lösungsmitteln befreit, in 800 ml Wasser aufgenommen und mit 100 g konzentrierter Salzsäure versetzt. Der entstandene Niederschlag wurde filtriert, zweimal mit je 200 ml Wasser gewaschen und im Wasserstrahlvakuum bei 130°C getrocknet. So erhielt man 80 g eines weißen Pulvers, entsprechend einer Ausbeute von 76,3 %, bezogen auf eingesetztes Hypophosphit.
Im $^{31}$P-NMR-Spektrum (NaOD) wurden folgende Signale gefunden:

δ = 42 - 48 ppm: breite Multipletts (polymere Phosphinsäuregruppen): Integral: 94,5
δ = 22 - 23 ppm: breites Multiplett (Phosphonsäure-Endgruppen): Integral: 3,7

berechnete mittlere Kettenlänge: $\bar{u}$ = 52

Beispiel 2: Polyethylenphosphinsäure (Phosphonsäure-Endgruppen)

In einem beheizbaren Glasrohrreaktor mit Begasungsfritte wurde über einen Zeitraum von 8 h bei einer Temperatur von ca. 105°C gasförmiges Ethin (Acetylen) in eine Lösung von 212 g Natriumhypophosphit (2 mol) in 600 g Eisessig eingeleitet. Über den gesamten Zeitraum wurde dabei gleichmäßig eine Lösung von 22,8 g (5 Mol-%) Ammoniumperoxodisulfat in 100 g eines Wasser/Essigsäure-Gemisches (1:1) zudosiert. Nach einer Nachreaktionszeit von 0,5 h, Entfernung des Ethins (Acetylens) mittels Durchleiten von Stickstoff wurde die Reaktionsmischung von den Lösungsmitteln befreit, in 2000 ml Wasser aufgenommen und innerhalb von 30 min mit 210 g konzentrierter Salzsäure versetzt. Der entstandene Niederschlag wurde filtriert, zweimal mit je 500 ml Wasser gewaschen und im Wasserstrahlvakuum bei 130°C getrocknet. Nach Mahlen des getrockneten Feststoffes erhielt man 180 g eines weißen Pulvers, entsprechend einer Ausbeute von 76,3 %, bezogen auf eingesetztes Hypophosphit.
Im $^{31}$P-NMR-Spektrum (NaOD) wurden folgende Signale gefunden:

δ = 42 - 48 ppm: breite Multipletts (polymere Phosphinsäuregruppen): Integral: 92
δ = 22 - 23 ppm: breites Multiplett (Phosphonsäure-Endgruppen): Integral: 3;0

berechnete mittlere Kettenlänge: ü = 62

Beispiel 3: Polyethylenphosphinsäure-Natriumsalz (Phosphinsäure-Endgruppen)

In einem beheizbaren Glasrohrreaktor mit Begasungsfritte wurde über einen Zeitraum von 7 h bei einer Temperatur von ca. 100°C gasförmiges Ethin (Acetylen) in eine Lösung von 106 g Natriumhypophosphit (1 mol) in 300 g Eisessig eingeleitet. Über den gesamten Zeitraum wurde dabei gleichmäßig eine Lösung von 5,4 g (2 Mol-%) 2,2'-Azobis(2-amidinopropan)-dihydrochlorid in 100 g eines Wasser/Essigsäure-Gemisches (1:3) zudosiert. Nach einer Nachreaktionszeit von 0,5 h, Entfernung des Ethins (Acetylens) mittels Durchleiten von Stickstoff wurden innerhalb von weiteren 15 h bei 100°C Ethylen in die Reaktionsmischung eingeleitet. Dabei wurde gleichmäßig eine Lösung von 10,8 g (4 Mol-%) 2,2'-Azobis(2-amidinopropan)-dihydrochlorid in 200 g eines Wasser/Essigsäure-Gemisches (1:3) zudosiert. Nach Abkühlung auf Raumtemperatur erhielt man 660 g einer Lösung des Natriumsalzes der Polyethylenphosphinsäure, die $^{31}$P-NMR-spektroskopisch vermessen wurde. Dabei wurden folgende Signale gefunden:

δ = 46 - 50 ppm: breite Multipletts (mittelständige Phosphinsäuregruppen): Integral: 55
δ = 53 - 55 ppm: breites Multiplett (Phosphinsäure-Endgruppen): Integral: 34.6

berechnete mittlere Kettenlänge: ü = 4.2

Beispiel 4: Polyethylenphosphinsäure (Phosphinsäure-Endgruppen)

In einem beheizbaren Glasrohrreaktor mit Begasungsfritte wurde über einen Zeitraum von 20 h bei einer Temperatur von ca. 100°C gasförmiges Ethin (Acetylen) in eine Lösung von 106 g Natriumhypophosphit (1 mol) in 300 g Eisessig eingeleitet. Über den gesamten Zeitraum wurde dabei gleichmäßig eine Lösung von 16.2 g (6 Mol-%) 2,2'-Azobis(2-amidinopropan)-dihydrochlorid in 100 g eines Wasser/Essigsäure-Gemisches (1:3) zudosiert. Nach einer Nachreaktionszeit von 0,5 h, Entfernung des Ethins (Acetylens) mittels Durchleiten von Stickstoff wurden innerhalb von weiteren 15 h bei 100°C Ethylen in die Reaktionsmischung eingeleitet. Dabei wurde gleichmäßig eine Lösung von 10,8 g (4 Mol-%) 2,2'-Azobis(2-amidinopropan)-dihydrochlorid in 200 g eines Wasser/Essigsäure-Gemisches (1:3) zudosiert. Nach Abkühlung auf Raumtemperatur wurde die Reaktionsmischung von den Lösungsmitteln befreit, in 800 ml Wasser aufgenommen und mit 100 g konzentrierter Salzsäure versetzt. Der entstandene Niederschlag wurde filtriert, zweimal mit je 200 ml Wasser gewaschen und im Wasserstrahlvakuum bei 130°C getrocknet. So erhielt man 82 g eines weißen Pulvers, entsprechend einer Ausbeute von 77;5 %, bezogen auf eingesetztes Hypophosphit.
Im $^{31}$P-NMR-Spektrum (NaOD) wurden folgende Signale gefunden:

δ = 45 - 50 ppm: breite Multipletts (mittelständige Phosphinsäuregruppen): Integral: 89
δ = 53 - 55 ppm: breites Multiplett (Phosphinsäure-Endgruppen): Integral: 5

berechnete mittlere Kettenlänge: $\bar{u}$ = 36;6

Beispiel 5: Polyethylenphosphinsäure-Aluminiumsalz (Phosphinsäure-Endgruppen)

330 g (0;5 Mol) der nach Beispiel 3 erhaltenen Lösung des Natriumsalzes der Polyethylenphosphinsäure wurden mit weiteren 400 g Essigsäure und 13 g (0,166 Mol) Aluminiumhydroxid versetzt und 6 h unter Rückfluss erhitzt. Anschließend wurde filtriert, der zweimal mit je 300 ml Wasser gewaschen und der Feststoff im Wasserstrahlvakuum bei 130°C getrocknet. Man erhielt so 36 g Polyethylenphosphinsäure-Aluminiumsalz, entsprechend einer Ausbeute von 72%. Im $^{31}$P-NMR-Spektrum (NaOD) wurden folgende Signale gefunden:

δ = 46 - 50 ppm: breite Multipletts (mittelständige Phosphinsäuregruppen): Integral: 65
δ = 53 - 55 ppm: breites Multiplett (Phosphinsäure-Endgruppen): Integral: 24;6

berechnete mittlere Kettenlänge: ü = 6;3

Beispiel 6: Polyethylenphosphinsäure-Aluminiumsalz (Phosphinsäure-Endgruppen)

41 g (0,4 Mol) der nach Beispiel 4 erhaltenen Polyethylenphosphinsäure wurden langsam in eine Lösung von 16 g (0,4 Mol) NaOH in 100 ml Wasser eingetragen, wobei eine klare Lösung des Polyethylenphosphinsäure-Natriumsalzes entstand. Anschließend wurde eine Lösung von 43 g (0,065 Mol) $Al_2(SO_4)_3 \cdot 18\ H_2O$ in 50 ml Wasser zugetropft. Das spontan ausfallende Salz wurde abfiltriert und zweimal mit je 100 ml Wasser gewaschen. Nach Trocknen im Wasserstrahlvakuum bei 130°C erhielt man 43,8 g Polyethylenphosphinsäure-Aluminiumsalz, entsprechend einer Ausbeute von 96%.

Beispiel 7: Polyethylenphosphinsäure-Melaminsalz (Phosphonsäure-Endgruppen)

90 g der nach Beispiel 2 erhaltenen Polyethylenphosphinsäure wurden in eine Lösung von 38,7 g NaOH in 4000 ml Wasser eingetragen, wobei eine klare Lösung des Polyethylenphosphinsäure-Natriumsalzes entstand. Anschließend wurde bei 60°C portionsweise innerhalb von 90 min 157 g Melaminhydrochlorid eingetragen und weitere 30 min nachreagieren gelassen. Das ausgefallene Salz wurde abfiltriert und zweimal mit je 1000 ml Wasser gewaschen. Nach Trocknen im Wasserstrahlvakuum bei 130°C erhielt man 199 g Polyethylenphosphinsäure-Melaminsalz, entsprechend einer Ausbeute von 94 %.

## Patentansprüche

1. Polymere Phosphinsäuren und ihre Salze der allgemeinen Formel (I),

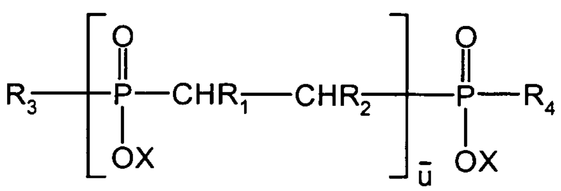

(I)

in der
X Wasserstoff oder ein 1/m Metall der Wertigkeit m bedeutet oder eine protonierte Stickstoffbase bedeutet
$R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen,
$R_3$, $R_4$ gleich oder verschieden sein können und für eine - ggf. substituierte - Alkylgruppe mit 2 - 20 C-Atomen oder für OX mit der oben für X genannten Bedeutung steht und
$\bar{u}$ die mittlere Zahl von Monomereinheiten bedeutet.

2. Polymere Phosphinsäuren und ihre Salze nach Anspruch 1, **dadurch gekennzeichnet, dass** es sich bei X um ein Metall der Gruppen IA, IIA, IIIA, IVA, VA, IIB, IVB, VIIB, VIIIB des Periodensystems oder um Cer handelt.

3. Polymere Phosphinsäuren und ihre Salze nach Anspruch 1 oder 2, **dadurch gekennzeichnet, dass** es sich bei dem Metall um Li, Na, K, Mg, Ca, Sr, Ba, Al, Ge, Sn, Sb, Bi, Zn, Ti, Zr, Mn, Fe und/oder Ce handelt.

4. Polymere Phosphinsäuren und ihre Salze nach einem oder mehreren der Ansprüche 1 bis 3, **dadurch gekennzeichnet, dass** es sich bei dem Metall um Na, Ca, Al und/oder Zn handelt.

5. Polymere Phosphinsäuren und ihre Salze nach Anspruch 1, **dadurch gekennzeichnet, dass** es sich bei X um H handelt.

6. Polymere Phosphinsäuren und ihre Salze nach Anspruch 1, **dadurch gekennzeichnet, dass** es sich bei X um die protonierten Formen der Stickstoffbasen Ammoniak, Melamin oder Triethanolamin handelt.

7. Polymere Phosphinsäuren und ihre Salze nach Anspruch 1, **dadurch gekennzeichnet, dass** $R_1$, $R_2$ gleich oder verschieden sind und für Wasserstoff oder für eine - ggf. substituierte - Alkylgruppe mit 1 bis 10 C-Atomen stehen.

8. Polymere Phosphinsäuren und ihre Salze nach Anspruch 1, **dadurch gekennzeichnet, dass** $R_1$, $R_2$ gleich oder verschieden sind und für Wasserstoff oder für eine - ggf. substituierte - Alkylgruppe mit 1 bis 10 C-Atomen stehen, wobei es sich bei den Substituenten um einen oder mehreren aus den Gruppen OH, CN, $NH_2$ handelt.

9. Polymere Phosphinsäuren und ihre Salze nach Anspruch 1, **dadurch gekennzeichnet, dass** $R_1$, $R_2$ gleich oder verschieden sind und für Wasserstoff oder für eine Alkylgruppe mit 1 bis 4 C-Atomen, die mit ein oder zwei OH-Gruppen substituiert ist, stehen.

10. Polymere Phosphinsäuren und ihre Salze nach Anspruch 1, **dadurch gekennzeichnet, dass** $R_1$, $R_2$ gleich oder verschieden sind und für Wasserstoff oder für ein Carbonsäurederivat stehen.

11. Polymere Phosphinsäuren und ihre Salze nach Anspruch 1, **dadurch gekennzeichnet, dass** $R_1$, $R_2$ gleich oder verschieden sind und für Wasserstoff oder für ein Carbonsäurederivat der Formel COOR und worin R eine Alkylgruppe mit 1 bis 4 C-Atomen bedeutet, stehen.

12. Polymere Phosphinsäuren und ihre Salze nach einem oder mehreren der Ansprüche 1 bis 11, **dadurch gekennzeichnet, dass** $R_3$, $R_4$ für eine - ggf. substituierte - Alkylgruppe mit 1 bis 10 C-Atomen stehen.

13. Polymere Phosphinsäuren und ihre Salze nach einem oder mehreren der Ansprüche 1 bis 12, **dadurch gekennzeichnet, dass** $R_3$, $R_4$ jeweils für eine Ethyl-, Propyl- oder Butylgruppe stehen.

14. Polymere Phosphinsäuren und ihre Salze nach einem oder mehreren der Ansprüche 1 bis 11, **dadurch gekennzeichnet, dass** $R_3$, $R_4$ jeweils für eine OX-Gruppe, mit der für X oben angegebenen Bedeutung, stehen.

15. Polymere Phosphinsäuren und ihre Salze nach einem oder mehreren der Ansprüche 1 bis 14, **dadurch gekennzeichnet, dass** $R_3$, $R_4$ jeweils für eine OH-Gruppe stehen.

16. Polymere Phosphinsäuren und ihre Salze der Formel

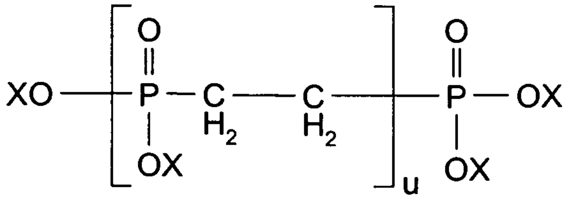

mit X = H, 1/m Metall, Amin-$H^+$

17. Polymere Phosphinsäuren und ihre Salze der Formel

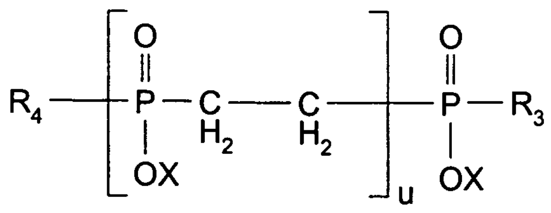

mit X = H, 1/m Metall, Amin-$H^+$
mit $R_3$, $R_4$ = Ethyl, Propyl, Butyl

**18.** Verfahren zur Herstellung von polymeren Phosphinsäuren und ihren Salzen der Formel (I), **dadurch gekennzeichnet, dass** man Hypophosphorige Säure und/oder ihre Alkalimetallsalze mit Alkine (Acetylene)n der Formel (II),

$$R_1 - C \equiv C - R_2 \qquad (II)$$

in der $R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, umsetzt und die entstehenden Phosphonigsäure-Endgruppen zu Phosphonsäure-Endgruppen oxidiert.

**19.** Verfahren zur Herstellung von polymeren Phosphinsäuren und ihren Salzen der Formel (I), **dadurch gekennzeichnet, dass** man Hypophosphorige Säure und/oder ihre Alkalimetallsalze mit Alkine (Acetylene)n der Formel (II),

$$R_1 - C \equiv C - R_2 \qquad (II)$$

in der $R_1$, $R_2$ gleich oder verschieden sind und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen, umsetzt und die entstehenden Phosphonigsäure-Endgruppen mit Olefinen zu Phosphinsäure-Endgruppen umsetzt.

**20.** Verfahren zur Herstellung von polymeren Phosphinsäuren und ihren Salzen der Formel (I) nach Anspruch 18 oder 19, **dadurch gekennzeichnet, dass** man pro Mol Hypophosphorige Säure oder ihrem Alkalimetallsalz 0,6 bis 1,5 Mol Ethin (Acetylen) der Formel (II) einsetzt.

**21.** Verfahren zur Herstellung von polymeren Phosphinsäuren und ihren Salzen der Formel (I) nach einem oder mehreren der Ansprüche 18 bis 20, **dadurch gekennzeichnet, dass** die Umsetzung in Gegenwart eines Radikalstarters erfolgt.

**22.** Verfahren zur Herstellung von polymeren Phosphinsäuren und ihren Salzen der Formel (I) nach einem oder mehreren der Ansprüche 18 bis 21, **dadurch gekennzeichnet, dass** die Radikalstarter während der Reaktion kontinuierlich zudosiert werden.

**23.** Verfahren zur Herstellung von polymeren Phosphinsäuren und ihren Salzen der Formel (I) nach einem oder mehreren der Ansprüche 18 bis 22, **dadurch gekennzeichnet, dass** die Radikalstarter während der Reaktion in Form einer Lösung im Olefin kontinuierlich zudosiert werden.

**24.** Verfahren zur Herstellung von polymeren Phosphinsäuren und ihren Salzen der Formel (I) nach einem oder mehreren der Ansprüche 18 bis 22, **dadurch gekennzeichnet, dass** die Radikalstarter während der Reaktion in Form einer Lösung im verwendeten Lösungsmittel kontinuierlich zudosiert werden.

**25.** Verfahren zur Herstellung von polymeren Phosphinsäuren und ihren Salzen der Formel (I) nach einem oder mehreren der Ansprüche 18 bis 24, **dadurch gekennzeichnet, dass** als Radikalstarter Azoverbindungen eingesetzt werden.

**26.** Verfahren zur Herstellung von polymeren Phosphinsäuren und ihren Salzen der Formel (I) nach einem oder mehreren der Ansprüche 18 bis 25, **dadurch gekennzeichnet, dass** es sich bei den Azoverbindungen um kationische und/oder nicht-kationische Azo-Verbindungen handelt.

**27.** Verfahren zur Herstellung von polymeren Phosphinsäuren und ihren Salzen der Formel (I) nach einem oder mehreren der Ansprüche 18 bis 26, **dadurch gekennzeichnet, dass** als kationische Azoverbindungen 2,2'-Azobis (2-amidinopropan)-dihydrochlorid oder 2,2'-Azobis(N,N'-dimethylenisobutyramidin)-dihydrochlorid eingesetzt werden.

**28.** Verfahren zur Herstellung von polymeren Phosphinsäuren und ihren Salzen der Formel (I) nach einem oder mehreren der Ansprüche 18 bis 26, **dadurch gekennzeichnet, dass** als nicht-kationische Azoverbindungen Azobis (isobutyronitril), 4,4'-Azobis(4-cyano-pentansäure) oder 2,2'-Azobis(2-methylbutyronitril) eingesetzt werden.

**29.** Verfahren zur Herstellung von polymeren Phosphinsäuren und ihren Salzen der Formel (I) nach einem oder mehreren der Ansprüche 18 bis 24, **dadurch gekennzeichnet, dass** als Radikalstarter peroxidische anorganische und/oder peroxidische organische Radikalstarter eingesetzt werden.

**30.** Verfahren zur Herstellung von polymeren Phosphinsäuren und ihren Salzen der Formel (I) nach Anspruch 29, **dadurch gekennzeichnet, dass** als peroxidische anorganische Radikalstarter Wasserstoffperoxid, Ammoniumperoxodisulfat, Natriumperoxodisulfat und/oder Kaliumperoxodisulfat eingesetzt werden.

**31.** Verfahren zur Herstellung von polymeren Phosphinsäuren und ihren Salzen der Formel (I) nach Anspruch 29, **dadurch gekennzeichnet, dass** als peroxidische organische Radikalstarter Dibenzoylperoxid, Di-tert.-butylperoxid und/oder Peressigsäure eingesetzt werden.

**32.** Verfahren zur Herstellung von polymeren Phosphinsäuren und ihren Salzen der Formel (I) nach einem oder mehreren der Ansprüche 18 bis 31, **dadurch gekennzeichnet, dass** die Umsetzung in einem polaren Lösungsmittel erfolgt.

**33.** Verfahren zur Herstellung von polymeren Phosphinsäuren und ihren Salzen der Formel (I) nach einem oder mehreren der Ansprüche 18 bis 32, **dadurch gekennzeichnet, dass** es sich bei dem polaren Lösungsmittel um Wasser oder Essigsäure handelt.

**34.** Verfahren zur Herstellung von polymeren Phosphinsäuren und ihren Salzen der Formel (I) nach einem oder mehreren der Ansprüche 18 bis 33, **dadurch gekennzeichnet, dass** die Umsetzung bei einer Temperatur von 20 bis 180 °C erfolgt.

**35.** Verfahren zur Herstellung von polymeren Phosphinsäuren und ihren Salzen der Formel (I) nach einem oder mehreren der Ansprüche 18 bis 34, **dadurch gekennzeichnet, dass** die Umsetzung bei einer Temperatur von 80 bis 120°C erfolgt.

**36.** Verfahren zur Herstellung von polymeren Phosphinsäuren und ihren Salzen der Formel (I) nach einem oder mehreren der Ansprüche 18 bis 35, **dadurch gekennzeichnet, dass** die Umsetzung in einem Druckreaktor erfolgt.

**37.** Verfahren zur Herstellung von polymeren Phosphinsäuren und ihren Salzen der Formel (I) nach einem oder mehreren der Ansprüche 18 bis 35, **dadurch gekennzeichnet, dass** das Verfahren drucklos ausgeführt wird.

**38.** Verfahren zur Herstellung von polymeren Phosphinsäuren und ihren Salzen der Formel (I) nach einem oder mehreren der Ansprüche 18 bis 37, **dadurch gekennzeichnet, dass** als Edukt Hypophosphorige Säure und/oder Alkalisalze der Hypophosphorigen Säure eingesetzt werden.

**39.** Verfahren zur Herstellung von polymeren Phosphinsäuren und ihren Salzen der Formel (I) nach einem oder mehreren der Ansprüche 18 bis 38, **dadurch gekennzeichnet, dass** als Edukt Natriumhypophosphit eingesetzt wird.

**40.** Verfahren zur Herstellung von polymeren Phosphinsäuren und ihren Salzen der Formel (I) nach einem oder mehreren der Ansprüche 18 bis 39, **dadurch gekennzeichnet, dass** als Alkine (Acetylene) Ethin, Phenylacetylen, Diphenylacetylen, Propin, 1-Butin, 2-Butin, 1-Phenylbutin, 1-Pentin, 2-Pentin, 1-Phenyl-1-pentin, 1-Hexin, 2-Hexin, 3-Hexin, 1-Phenyl-1-hexin, 1-Heptin, 1-Octin, 4-Octin, 1-Nonin, 1-Decin und 1-Dodecin, die Alkinole Propargylalkohol, 1-Butin-3-ol, 2-Butin-1-ol, 2-Butin-1,4-diol, 1-Pentin-3-ol, 2-Pentin-1-ol, 4-Pentin-1-ol, 4-Pentin-2-ol, 3-Hexin-1-ol, 5-Hexin-1-ol, 3-Hexin-2,5-diol, 2-Octin-1-ol, 1-Octin-3-ol, 3-Nonin-1-ol, 3-Decin-1-ol sowie Propargylchlorid, Propargylbromid, Propargylamin, Propiolsäure, Propiolsäuremethylester, Propiolsäureethyl-ester, 2-Butinsäure, 2-Butinsäure-ethylester, 4-Pentinsäure, 5-Hexinsäurenitril, 2-Octinsäure, 2-Octinsäure-methylester, 2-Nonylsäuremethylester, Acetylendicarbonsäure, Acetylen-dicarbonsäurediethylester und/oder Acetylendicarbonsäuredimethylester eingesetzt werden.

**41.** Verfahren zur Herstellung von polymeren Phosphinsäuren und ihren Salzen der Formel (I) nach einem oder mehreren der Ansprüche 18 bis 40, **dadurch gekennzeichnet, dass** als Alkine (Acetylene) die 1-Alkine, Propargylalkohol, Butindiol, Propiolsäure und Acetylendicarbonsäure-Derivate eingesetzt werden.

**42.** Verfahren zur Herstellung von polymeren Phosphinsäuren und ihren Salzen der Formel (I) nach einem oder mehreren der Ansprüche 18 bis 41, **dadurch gekennzeichnet, dass** Ethin (Acetylen) eingesetzt wird.

**43.** Verfahren zur Herstellung von polymeren Phosphinsäuren und ihren Salzen der Formel (I) nach einem oder mehreren der Ansprüche 18 bis 42, **dadurch gekennzeichnet, dass** die Oxidation der erhaltenen Phosphonigsäure-Endgruppen zu Phosphonsäure-Endgruppen erfolgt mit Oxidationsmitteln erfolgt.

**44.** Verfahren zur Herstellung von polymeren Phosphinsäuren und ihren Salzen der Formel (I) nach Anspruch 43, **dadurch gekennzeichnet, dass** die Oxidation mit Wasserstoffperoxid oder Ammoniumperoxodisulfat erfolgt.

**45.** Verfahren zur Herstellung von polymeren Phosphinsäuren und ihren Salzen der Formel (I) nach Anspruch 42 oder 43, **dadurch gekennzeichnet, dass** die Endgruppen-Oxidation teilweise bereits während der Polymerherstellung durch den eingesetzten Initiator Ammoniumperoxodisulfat erfolgt und nach Abschluß des Kettenaufbaus vervollständigt wird.

**46.** Verfahren zur Herstellung von polymeren Phosphinsäuren und ihren Salzen der Formel (I) nach einem oder mehreren der Ansprüche 18 bis 42, **dadurch gekennzeichnet, dass** die Umsetzung der erhaltenen Phosphonigsäure-Endgruppen zu Phosphinsäure-Endgruppen durch Umsetzung mit Olefinen erfolgt.

**47.** Verfahren zur Herstellung von polymeren Phosphinsäuren und ihren Salzen der Formel (I) nach Anspruch 46, **dadurch gekennzeichnet, dass** als Olefine Ethylen, Propylen, n-, i-Buten, n-, i-Penten, n-, i-Hexen, n-, i-Octen, 1-Decen, 1,5-Cyclooctadien, 1,3-Cyclopentadien, Dicyclopentadien und/oder 2,4,4-Trimethylpenten-Isomerengemisch eingesetzt werden.

**48.** Verfahren zur Herstellung von polymeren Phosphinsäuren und ihren Salzen der Formel (I) nach Anspruch 46 oder 47, **dadurch gekennzeichnet, dass** die Olefine eine funktionelle Gruppe tragen.

**49.** Verfahren zur Herstellung von polymeren Phosphinsäuren und ihren Salzen der Formel (I) nach einem oder mehreren der Ansprüche 46 bis 48, **dadurch gekennzeichnet, dass** als Olefine Verbindungen der allgemeinen Formel

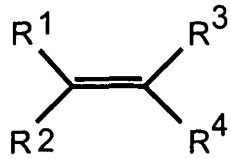

in der $R^1$-$R^4$ gleich oder verschieden sein können und für Wasserstoff, eine Alkylgruppe mit 1 bis 18 C-Atomen, für Phenyl, Benzyl oder alkylsubstituierte Aromaten stehen, eingesetzt werden.

**50.** Verfahren zur Herstellung von polymeren Phosphinsäuren und ihren Salzen der Formel (I) nach einem oder mehreren der Ansprüche 46 bis 48, **dadurch gekennzeichnet, dass** Cycloolefine der Formel

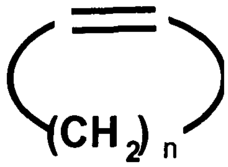

insbesondere Cyclopenten, Cyclohexen, Cycloocten und Cyclodecen, eingesetzt werden.

**51.** Verfahren zur Herstellung von polymeren Phosphinsäuren und ihren Salzen der Formel (I) nach einem oder mehreren der Ansprüche 46 bis 50, **dadurch gekennzeichnet, dass** Umsetzung mit Olefinen zeitlich nach der Umsetzung mit Alkinen erfolgt.

**52.** Verfahren zur Herstellung von polymeren Phosphinsäuren und ihren Salzen der Formel (I) nach einem oder mehreren der Ansprüche 46 bis 50, **dadurch gekennzeichnet, dass** das Olefin bereits während der Umsetzung mit Alkinen hinzugefügt wird.

**53.** Verwendung von polymeren Phosphinsäuren und ihren Salzen nach einem oder mehreren der Ansprüche 1 bis 18 als Flammschutzmittel oder zur Herstellung von Flammschutzmitteln.

**54.** Verwendung von polymeren Phosphinsäuren und ihren Salzen nach einem oder mehreren der Ansprüche 1 bis 18 als Flammschutzmittel in thermoplastischen oder duroplastischen Polymeren.

**55.** Verwendung von polymeren Phosphinsäuren und ihren Salzen nach einem oder mehreren der Ansprüche 1 bis 18 als Bestandteil von Brandschutzbeschichtungen.

**56.** Verwendung von polymeren Phosphinsäuren und ihren Salzen nach einem oder mehreren der Ansprüche 1 bis 18 zur Herstellung von Synthesebausteinen für die phosphororganische Synthese.

Europäisches Patentamt

# EUROPÄISCHER RECHERCHENBERICHT

Nummer der Anmeldung
EP 04 00 4107

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 01/57050 A (OTTER GRAHAM PHILIP ; WOODWARD GARY (GB); DAVIS KEITH PHILIP (GB); RHO) 9. August 2001 (2001-08-09)<br>* Ansprüche 1-8,10-34; Beispiele 1,4,5 *<br>* Seite 3, Zeile 23 - Seite 5, Zeile 20 * | 1-13,17, 18, 20-22, 24-45,48 | C08G79/04<br>C07F9/30<br>C07F9/48 |
| X | MAIER L: "Organic phosphorus compounds. 47. Synthesis and properties of bis(phosphonylethyl)phosphinates and the corresponding acid"<br>PHOSPHORUS, XX, CH,<br>Bd. 1, 1971, Seiten 105-109, XP002085311<br>* das ganze Dokument * | 1,5, 7-11, 14-16,56 | |
| D,A | DE 199 12 920 A (CLARIANT GMBH)<br>28. September 2000 (2000-09-28)<br>* das ganze Dokument * | 1-56 | |
| D,A | DE 198 51 618 A (CLARIANT GMBH)<br>24. Juni 1999 (1999-06-24)<br>* das ganze Dokument * | 19-39, 46-50, 53-56 | |

RECHERCHIERTE SACHGEBIETE (Int.Cl.7)

C07F
C08G

Der vorliegende Recherchenbericht wurde für alle Patentansprüche erstellt

| Recherchenort | Abschlußdatum der Recherche | Prüfer |
|---|---|---|
| München | 25. Juni 2004 | Hollender, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 04 00 4107

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2004

| Im Recherchenbericht angeführtes Patentdokument | Datum der Veröffentlichung | Mitglied(er) der Patentfamilie | Datum der Veröffentlichung |
|---|---|---|---|
| WO 0157050 A | 09-08-2001 | AT 250618 T | 15-10-2003 |
| | | AU 3198801 A | 14-08-2001 |
| | | CA 2399017 A1 | 09-08-2001 |
| | | CN 1419562 T | 21-05-2003 |
| | | DE 60100849 D1 | 30-10-2003 |
| | | EP 1254144 A1 | 06-11-2002 |
| | | ES 2202273 T3 | 01-04-2004 |
| | | WO 0157050 A1 | 09-08-2001 |
| | | NO 20023666 A | 10-09-2002 |
| | | PT 1254144 T | 27-02-2004 |
| | | US 2003073805 A1 | 17-04-2003 |
| DE 19912920 A | 28-09-2000 | DE 19912920 A1 | 28-09-2000 |
| | | AT 239742 T | 15-05-2003 |
| | | AU 2905700 A | 09-10-2000 |
| | | DE 50002078 D1 | 12-06-2003 |
| | | WO 0056741 A1 | 28-09-2000 |
| | | EP 1165571 A1 | 02-01-2002 |
| | | ES 2195871 T3 | 16-12-2003 |
| | | JP 2002540224 T | 26-11-2002 |
| | | TW 498077 B | 11-08-2002 |
| | | US 2003216533 A1 | 20-11-2003 |
| | | US 6569974 B1 | 27-05-2003 |
| DE 19851618 A | 24-06-1999 | DE 19752734 C1 | 04-11-1999 |
| | | DE 19851618 A1 | 24-06-1999 |
| | | AT 233270 T | 15-03-2003 |
| | | AU 2266899 A | 16-06-1999 |
| | | BR 9815058 A | 03-10-2000 |
| | | CA 2311330 A1 | 10-06-1999 |
| | | CN 1280584 T | 17-01-2001 |
| | | DE 59807338 D1 | 03-04-2003 |
| | | WO 9928328 A1 | 10-06-1999 |
| | | EP 1034179 A1 | 13-09-2000 |
| | | ES 2193605 T3 | 01-11-2003 |
| | | JP 2001525328 T | 11-12-2001 |
| | | US 6300516 B1 | 09-10-2001 |
| | | US 6329544 B1 | 11-12-2001 |
| | | ZA 9810859 A | 29-05-2000 |

EPO FORM P0461

Für nähere Einzelheiten zu diesem Anhang : siehe Amtsblatt des Europäischen Patentamts, Nr.12/82